# EUROPEAN PATENT APPLICATION

(11) **EP 3 972 206 A1**
(43) Date of publication of application: **23.03.2022**
(21) Application number: 20847142.5
(22) Date of filing: 22.07.2020
(51) Int. Cl.: H04L 12/707, H04L 29/08

(54) **METHOD, NETWORK DEVICE AND SYSTEM FOR PROCESSING BIER PACKET**

(30) Priority: 26.07.2019 CN 201910684935
(71) Applicant: Huawei Technologies Co., Ltd., Longgang District Shenzhen, Guangdong 518129 (CN)
(72) Inventor: LIANG, Yanrong, Shenzhen, Guangdong 518129 (CN); LI, Zhi, Shenzhen, Guangdong 518129 (CN); WANG, Heng, Shenzhen, Guangdong 518129 (CN)
(74) Representative: Maiwald Patent- und Rechtsanwaltsgesellschaft mbH
(86) International application number: PCT/CN2020/103617
(87) International publication number: WO 2021/017985

(57) **Abstract**

Embodiments of this application disclose a BIER packet processing method. The method includes: receiving, by a first network device, a first BIER packet sent by a second network device, where the first BIER packet carries a device identifier of the second network device, and the first network device is an intermediate network device that is in a BIER domain and that is configured to forward the first BIER packet; obtaining, by the first network device, a device identifier of a third network device based on a correspondence between the first BIER packet and the third network device, where the third network device is a next hop that is of the first network device and that is obtained to forward the first BIER packet; and if the device identifier of the second network device is the same as the device identifier of the third network device, discarding, by the first network device, the first BIER packet; or if the device identifier of the second network device is different from the device identifier of the third network device, sending, by the first network device to the third network device, a second BIER packet generated based on the first BIER packet. In this way, cyclic transmission of the BIER packet can be avoided. In addition, the embodiments of this application further disclose a BIER packet network device and system.

## Description

This application claims priority to Chinese Patent Application No. 201910684935.9, filed with the China National Intellectual Property Administration on July 26, 2019 and entitled "BIER PACKET PROCESSING METHOD, NETWORK DEVICE, AND SYSTEM", which is incorporated herein by reference in its entirety.

### TECHNICAL FIELD

This application relates to the field of communication technologies, and in particular, to a bit index explicit replication (English: bit index explicit replication, BIER for short) packet processing method, network device, and system.

### BACKGROUND

In some networks, for example, a network using a BIER technology, a network device does not identify packet return when forwarding a received packet to a next-hop network device. As a result, in some cases, the network device may send the received BIER packet to a sender of the BIER packet. Consequently, the BIER packet is continuously cyclically transmitted between the two network devices, which wastes bandwidth and affects a normally transmitted service flow.

### SUMMARY

Based on this, embodiments of this application provide a BIER packet processing method, network device, and system, to reduce cyclic transmission of a BIER packet between network devices.

According to a first aspect, an embodiment of this application provides a BIER packet processing method. According to the method, when sending a first BIER packet to a first network device, a second network device includes a device identifier of the second network device in the first BIER packet, where the first network device is an intermediate network device that is in a BIER domain and that is configured to forward the first BIER packet. When receiving the first BIER packet, the first network device may obtain the device identifier of the second network device from the first BIER packet, and obtain a device identifier of a third network device based on a correspondence between the first BIER packet and the third network device, where the third network device is a next hop that is of the first network device and that is obtained to send the first BIER packet. If the first network device determines that the device identifier of the second network device is the same as the device identifier of the third network device, the first network device may discard the first BIER packet. If the first network device determines that the device identifier of the second network device is different from the device identifier of the third network device, the first network device may generate a second BIER packet based on the first BIER packet, and send the second BIER packet to the third network device. It can be learned that for a BIER packet received by a network device, the network device may determine, based on a device identifier of a previous-hop network device to which an ingress direction of the BIER packet points and a device identifier of a next-hop network device to which an egress direction of the BIER packet points, whether the ingress direction and the egress direction point to a same network device, and discard the BIER packet when the ingress direction and the egress direction point to the same network device. In this way, cyclic transmission of the BIER packet between the two network devices is avoided, excessive bandwidth occupation is avoided, and a normally transmitted service flow prevented from being affected. The device identifiers mentioned in the first aspect, including the device identifier of the second network device and the device identifier of the third network device, may be BFR prefixes of the network devices, for example, IPv4 addresses or IPv6 addresses of BFRs, may be IS-IS system IDs of the network devices, or may be OSPF router IDs of the network devices.

The BFR prefix is used as an example. When sending the first BIER packet to the first network device, the second network device includes a BFR prefix of the second network device in the first BIER packet. When receiving the first BIER packet, the first network device may obtain the BFR prefix of the second network device from the first BIER packet, and obtain a BFR prefix of the third network device. Then, the first network device determines, based on whether the BFR prefix of the second network device is the same as the BFR prefix of the third network device, to discard the first BIER packet or send the second BIER packet generated based on the first BIER packet to the third network device.

With reference to any implementation of the first aspect, in a first possible implementation of the first aspect, the first network device may obtain the device identifier of the third network device in the following manner: The first network device determines forwarding information matching the first BIER packet, and obtains the device identifier of the third network device from the forwarding information. It can be learned that the first network device may record the device identifier of the third network device in the forwarding information used to send the BIER packet to the third network device, so that the first network device can conveniently obtain the device identifier of the third network device from the forwarding information when needing to send the BIER packet to the third network device.

With reference to any implementation of the first aspect, in a second possible implementation of the first aspect, the first network device may alternatively receive the device identifier of the third network device sent by the third network device. It can be learned that after the third network device sends the device identifier of the third network device to the first network device, when the first network device needs to send the BIER packet received from the second network device to the third network device, the first network device can determine, by using the device identifier of the third network device, whether the third network device and the second network device are the same device, to determine whether to send the BIER packet to the third network device.

With reference to the second possible implementation of the first aspect, in a third possible implementation of the first aspect, that the first network device receives the device identifier of the third network device sent by the third network device includes: The device identifier of the third network device may be carried in a first interior gateway protocol IGP protocol, where the first IGP protocol includes the device identifier of the third network device.

With reference to the third possible implementation of the first aspect, in a fourth possible implementation of the first aspect, the first IGP packet includes first type-length-value TLV information, and the first TLV information includes the device identifier of the third network device. It can be learned that the device identifier of the third network device may be advertised to a neighbor by using the TLV information of the IGP protocol.

With reference to any implementation of the first aspect, in a fifth possible implementation of the first aspect, before the first network device receives the first BIER packet sent by the second network device, the first network device may alternatively send first indication information to the second network device, where the first indication information is used to indicate to include the device identifier of the second network device in the BIER packet sent by the second network device to the first network device. It can be learned that the second network device may send the BIER packet that carries the device identifier of the second network device to the first network device when the first network device supports determining, based on the device identifiers of the network devices, whether the previous-hop network device is the same as the next-hop network device, and discarding the BIER packet when the previous-hop network device and the next-hop network device are the same.

With reference to the fifth possible implementation of the first aspect, in a sixth possible implementation of the first aspect, the first indication information may be carried in second TLV information of a second IGP protocol, and the second IGP protocol is sent by the first network device to the second network device. It can be learned that the first network device may advertise the first indication information to the neighbor by using the TLV information of the IGP protocol.

With reference to any implementation of the first aspect, in a seventh possible implementation of the first aspect, the second BIER packet carries a device identifier of the first network device. It can be learned that the third network device may obtain a device identifier of a previous-hop network device from the second BIER packet; and can determine, based on the device identifier, whether the previous-hop network device is the same as a next-hop network device, and discard the second BIER packet when the network devices are the same, to avoid cyclic transmission of the BIER packet.

With reference to any implementation of the first aspect, in an eighth possible implementation of the first aspect, the first network device may further receive a third BIER packet sent by a fourth network device. The first network device generates a fourth BIER packet based on the third BIER packet, where the fourth BIER packet includes the device identifier of the first network device, and sends the fourth BIER packet to a fifth network device. It can be learned that, when the second BIER packet received by the first network device does not carry a device identifier of the fourth network device, the first network device may also include the device identifier of the first network device in the fourth BIER packet generated based on the third BIER packet, and send the fourth BIER packet to the fifth network device. In this way, the fifth network device may obtain a device identifier of a previous-hop network device from the fourth BIER packet; and can determine, based on the device identifier, whether the previous-hop network device is the same as a next-hop network device, and discard the fourth BIER packet when the network devices are the same, to avoid cyclic transmission of the BIER packet.

With reference to the seventh possible implementation of the first aspect, in a ninth possible implementation of the first aspect, the first network device may alternatively send the device identifier of the first network device to the third network device. After the first network device sends the device identifier of the first network device to the third network device, when the third network device needs to send a BIER packet received from a network device to the first network device, the third network device can determine, by using the device identifier of the first network device, whether the network device and the first network device are a same device, to determine whether to send the BIER packet to the first network device.

With reference to the ninth possible implementation of the first aspect, in a tenth possible implementation of the first aspect, the device identifier of the first network device may be carried in third TLV information of an IGP protocol, and the IGP protocol is sent by the first network device to the third network device. It can be learned that the device identifier of the first network device may be advertised to the neighbor by using the TLV information of the IGP protocol.

With reference to the seventh, eighth, ninth, or tenth possible implementation of the first aspect, in an eleventh possible implementation of the first aspect, the first network device may alternatively receive second indication information sent by the third network device, where the second indication information is used to indicate to include the device identifier of the first network device in the BIER packet sent by the first network device to the third network device. It can be learned that the first network device may send the BIER packet that carries the device identifier of the first network device to the third network device when the third network device supports determining, based on the device identifiers of the network devices, whether the previous-hop network device is the same as the next-hop network device, and discarding the BIER packet when the previous-hop network device and the next-hop network device are the same.

With reference to the eleventh possible implementation of the first aspect, in a twelfth possible implementation of the first aspect, the second indication information may be carried in fourth TLV information of an IGP protocol, and the IGP protocol is sent by the third network device to the first network device. It can be learned that the third network device may advertise the first indication information to the neighbor by using the TLV information of the IGP protocol.

According to a second aspect, an embodiment of this application provides a packet processing method. According to the method, when a first network device receives a first BIER packet, the first network device may add a device identifier of the first network device to the first BIER packet, to obtain a second BIER packet, and send the second BIER packet to a second network device. The device identifier of the first network device carried in the second BIER packet is used to indicate the second network device to discard the second BIER packet when the device identifier of the first network device is the same as a device identifier of a third network device; and send a third BIER packet generated based on the second BIER packet to the third network device when the device identifier of the second network device is different from the device identifier of the third network device, where the third network device is a next hop that is of the first network device and that is obtained to forward the first BIER packet, and the second network device is an intermediate network device that is in a BIER domain and that is configured to forward the first BIER packet.

The device identifiers mentioned in the second aspect, including the device identifier of the first network device and the device identifier of the third network device, may be BFR prefixes of the network devices, for example, IPv4 addresses or IPv6 addresses of BFRs, may be IS-IS system IDs of the network devices, or may be OSPF router IDs of the network devices.

The BFR prefix is used as an example. When sending the second BIER packet to the second network device, the first network device includes a BFR prefix of the first network device in the second BIER packet. When receiving the second BIER packet, the second network device may obtain the BFR prefix of the first network device from the second BIER packet, and obtain a BFR prefix of the third network device. Then, the second network device determines, based on whether the BFR prefix of the first network device is the same as the BFR prefix of the third network device, to discard the second BIER packet or send the third BIER packet generated based on the second BIER packet to the third network device.

With reference to any possible implementation of the second aspect, in a first possible implementation of the second aspect, before sending the second BIER packet to the second network device, the first network device may alternatively send the device identifier of the first network device to the second network device. The first network device and the third network device are a same network device.

With reference to the first possible implementation of the second aspect, in a second possible implementation of the second aspect, that the first network device sends the device identifier of the first network device to the second network device includes: The first network device sends an interior gateway protocol IGP packet to the second network device, where the IGP packet includes the device identifier of the first network device.

With reference to the second possible implementation of the second aspect, in a third possible implementation of the second aspect, the IGP packet includes type-length-value TLV information, and the TLV information includes the device identifier of the first network device.

With reference to any possible implementation of the second aspect, in a fourth possible implementation of the second aspect, the first network device may alternatively receive indication information sent by the second network device, where the indication information is used to indicate to include the device identifier of the first network device in the packet sent by the first network device to the second network device.

With reference to the fourth possible implementation of the second aspect, in a fifth possible implementation of the second aspect, the indication information may be carried in second TLV information of an IGP protocol, and the IGP protocol is sent by the third network device to the first network device.

It should be noted that the method provided in the second aspect and the method provided in the first aspect are separately described from a perspective of two network devices that interact with each other in a same BIER packet processing method. The method provided in the second aspect corresponds to the method provided in the first aspect. Therefore, for various possible implementations and technical effects of the method provided in the second aspect, refer to the descriptions of the method provided in the first aspect.

According to a third aspect, an embodiment of this application provides a first network device, including a first receiving unit, an obtaining unit, and a processing unit. The first receiving unit is configured to receive a first bit index explicit replication BIER packet sent by a second network device, where the first BIER packet includes a device identifier of the second network device, and the first network device is an intermediate network device that is in a BIER domain and that is configured to forward the first BIER packet. The obtaining unit is configured to obtain a device identifier of a third network device based on a correspondence between the first BIER packet and the third network device, where the third network device is a next hop that is of the first network device and that is determined to forward the first BIER packet. The processing unit is configured to: discard the first BIER packet when the device identifier of the second network device is the same as the device identifier of the third network device; or send a second BIER packet generated based on the first BIER packet to the third network device when the device identifier of the second network device is different from the device identifier of the third network device.

With reference to any implementation of the third aspect, in a first possible implementation of the third aspect, the obtaining unit includes a determining subunit and an obtaining subunit. The determining subunit is configured to determine forwarding information matching the first BIER packet. The obtaining subunit is configured to obtain the device identifier of the third network device from the forwarding information.

With reference to any implementation of the third aspect, in a second possible implementation of the third aspect, the first network device further includes a second receiving unit. The second receiving unit is configured to receive the device identifier of the third network device sent by the third network device.

With reference to the second possible implementation of the third aspect, in a third possible implementation of the third aspect, the second receiving unit is specifically configured to receive the device identifier of the third network device carried in first type-length-value TLV information of a first interior gateway protocol IGP protocol, where the first IGP packet is sent by the third network device to the first network device.

With reference to any implementation of the third aspect, in a fourth possible implementation of the third aspect, the first network device further includes a first sending unit. The first sending unit is configured to: before receiving the first BIER packet sent by the second network device, send first indication information to the second network device, where the first indication information is used to indicate to include the device identifier of the second network device in the BIER packet sent by the second network device to the first network device.

With reference to the fourth possible implementation of the third aspect, in a fifth possible implementation of the third aspect, the first sending unit is specifically configured to include the first indication information in second TLV information of a second IGP protocol, and send the second IGP protocol to the second network device by the first network device.

With reference to any implementation of the third aspect, in a sixth possible implementation of the third aspect, the second BIER packet includes a device identifier of the first network device.

With reference to any implementation of the third aspect, in a seventh possible implementation of the third aspect, the first network device further includes a third receiving unit, a packet generation unit, and a second sending unit. The third receiving unit is configured to receive a third BIER packet sent by a fourth network device. The packet generation unit is configured to generate a fourth BIER packet based on the third BIER packet, where the fourth BIER packet includes the device identifier of the first network device. The second sending unit is configured to send the fourth BIER packet to a fifth network device.

With reference to the sixth possible implementation of the third aspect, in an eighth possible implementation of the third aspect, the first network device further includes a third sending unit. The third sending unit is configured to send the device identifier of the first network device to the third network device.

With reference to the eighth possible implementation of the third aspect, in a ninth possible implementation of the third aspect, the device identifier of the first network device may be carried in third TLV information of an IGP protocol, and the IGP protocol is sent by the first network device to the third network device.

With reference to the sixth, seventh, eighth, or ninth possible implementation of the third aspect, in a tenth possible implementation of the third aspect, the first network device further includes a fourth receiving unit. The fourth receiving unit is configured to receive second indication information sent by the third network device, where the second indication information is used to indicate to include the device identifier of the first network device in the BIER packet sent by the first network device to the third network device.

With reference to the tenth possible implementation of the third aspect, in an eleventh possible implementation of the third aspect, the second indication information may be carried in fourth TLV information of an IGP protocol, and the IGP protocol is sent by the third network device to the first network device.

It should be noted that the first network device provided in the third aspect corresponds to the method provided in the first aspect. Therefore, for various possible implementations and technical effects of the first network device provided in the third aspect, refer to the descriptions of the method provided in the first aspect.

According to a fourth aspect, an embodiment of this application provides a first network device, including a first receiving unit, a packet generation unit, and a first sending unit. The first receiving unit is configured to receive a first bit index explicit replication BIER packet. The packet generation unit is configured to generate a second BIER packet based on the first BIER packet, where the second BIER packet includes a device identifier of the first network device. The first sending unit is configured to send the second BIER packet to a second network device. The device identifier of the first network device is used to indicate the second network device to discard the second BIER packet when the device identifier of the first network device is the same as a device identifier of a third network device, or send a third BIER packet to the third network device when the device identifier of the second network device is different from the device identifier of the third network device. The third network device is a next hop that is of the first network device and that is determined to forward the first BIER packet, and the second network device is an intermediate network device that is in a BIER domain and that is configured to forward the first BIER packet.

With reference to any possible implementation of the fourth aspect, in a first possible implementation of the fourth aspect, the first network device further includes a second sending unit. The second sending unit is configured to: before the first sending unit sends the second BIER packet to the second network device, send the device identifier of the first network device to the second network device. The first network device and the third network device are a same network device.

With reference to the first possible implementation of the fourth aspect, in a second possible implementation of the fourth aspect, the second sending unit is specifically configured to include the device identifier of the first network device in first TLV information of an IGP protocol, and send the IGP protocol to the second network device by the first network device.

With reference to any possible implementation of the fourth aspect, in a third possible implementation of the fourth aspect, the first network device further includes a second receiving unit. The second receiving unit is configured to receive indication information sent by the second network device, where the indication information is used to indicate to include the device identifier of the first network device in the packet sent by the first network device to the second network device.

With reference to the third possible implementation of the fourth aspect, in a fourth possible implementation of the fourth aspect, the indication information may be carried in second TLV information of an IGP protocol, and the IGP protocol is sent by the third network device to the first network device.

It should be noted that the first network device provided in the fourth aspect corresponds to the method provided in the second aspect. Therefore, for various possible implementations and technical effects of the first network device provided in the fourth aspect, refer to the descriptions of the method provided in the second aspect.

According to a fifth aspect, an embodiment of this application further provides a network device, where the network device includes a memory and a processor. The memory is configured to store program code. The processor is configured to run instructions in the program code, to enable the network device to perform the method according to any implementation of the first aspect or any implementation of the second aspect.

According to a sixth aspect, an embodiment of this application further provides a computer program product. When the computer program product runs on a computer, the computer is enabled to perform the method according to any implementation of the first aspect or any implementation of the second aspect.

According to a seventh aspect, an embodiment of this application further provides a computer-readable storage medium. The computer-readable storage medium stores instructions. When the instructions are run on a computer or a processor, the computer or the processor is enabled to perform the method according to any implementation of the first aspect or any implementation of the second aspect.

According to an eighth aspect, an embodiment of this application provides a communication system. The communication system includes a first network device and a second network device. The first network device is the first network device according to any implementation of the third aspect, and the second network device is the first network device according to any implementation of the second aspect.

### BRIEF DESCRIPTION OF DRAWINGS

To describe technical solutions in embodiments of this application more clearly, the following briefly describes accompanying drawings used in describing the embodiments. It is clearly that the accompanying drawings in the following descriptions show merely some embodiments described in this application, and a person of ordinary skill in the art may further derive other accompanying drawings from these accompanying drawings.
FIG. 1 is a schematic diagram of a framework of a network system in an application scenario according to an embodiment of this application;
FIG. 2 is a schematic flowchart of a packet processing method according to an embodiment of this application;
FIG. 3 is a schematic diagram of a structure of an OSPF packet according to an embodiment of this application;
FIG. 4A is a schematic diagram of a structure of BIER sub-TLV information according to an embodiment of this application;
FIG. 4B is a schematic diagram of a structure of BIER sub-sub-TLV information according to an embodiment of this application;
FIG. 5 is a schematic diagram of a structure of a first network device for processing a BIER packet according to an embodiment of this application;
FIG. 6 is a schematic diagram of a structure of a first network device for processing a BIER packet according to an embodiment of this application;
FIG. 7 is a schematic diagram of a structure of a network device according to an embodiment of this application;
FIG. 8 is a schematic diagram of a structure of a network device according to an embodiment of this application; and
FIG. 9 is a schematic diagram of a structure of a communication system according to an embodiment of this application.

### DESCRIPTION OF EMBODIMENTS

In some networks, a network device does not identify packet return when forwarding a packet to a next-hop network device. For example, in a network using a BIER technology, a BIER packet is transmitted between bit-forwarding routers (English: bit-forwarding router, BFR for short). Based on different locations of the BFRs in a transmission link of the BIER packet, the BFRs used to transmit the BIER packet include a bit-forwarding ingress router (English: bit-forwarding ingress router, BFIR for short), an intermediate BFR, and a bit-forwarding egress router (English: bit-forwarding egress router, BFER for short). The packet enters a BIER domain from the BFIR and leaves the BIER domain from one or more BFERs. During transmission from the BFIR to the BFER, the packet may pass through one or more intermediate BFRs. When an intermediate BFR in the BIER network receives the BIER packet, because a corresponding bit of a bitstring (English: bitstring) carried in the BIER packet indicates a BFER that receives the BIER packet, the intermediate BFR may search, based on the bitstring carried in the BIER packet, for a forwarding entry matching the BIER packet. The forwarding entry matching the BIER packet on the intermediate BFR records a next-hop BFR of the intermediate BFR on a transmission path from the intermediate BFR to the BFER. Therefore, the BFR may send the BIER packet to the next-hop BFR based on the forwarding entry. However, the bitstring carried in the BIER packet does not indicate a previous-hop BFR that sends the BIER packet to the intermediate BFR. Therefore, the intermediate BFR cannot identify the previous-hop BFR in an ingress direction of the BIER packet based on the bitstring carried in the BIER packet. Therefore, the intermediate BFR does not determine whether the previous-hop BFR and the next-hop BFR are a same BFR, that is, whether a packet return problem exists.

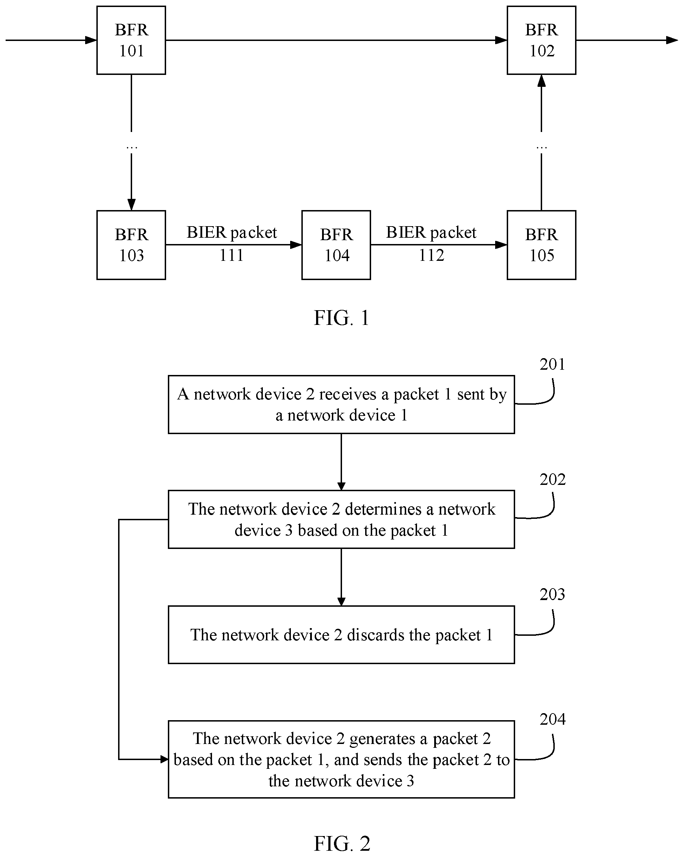

In some cases in which the network device does not identify return of the BIER packet, the network device, for example, the intermediate BFR, may send back the received BIER packet in the ingress direction, in other words, the network device may send the BIER packet to the previous-hop network device of the network device. Then, the previous-hop network device of the network device sends the BIER packet to the network device again. This process repeats, and consequently the BIER packet is continuously cyclically transmitted between the two network devices. In this way, not only transmission of a service flow is affected, but also other service flows normally transmitted between a network device A and a network device B are affected. For example, in an example of a scenario shown in FIG. 1, a BFR 101 may be a BFIR, a BFR 102 may be a BFER, and a BFR 103, a BFR 104, and a BFR 105 may be intermediate BFRs. A primary path for forwarding a BIER packet is from the BFR 101 to the BFR 102, and a secondary path is from the BFR 101 to the BFR 102 through a plurality of BFRs such as the BFR 103, the BFR 104, and the BFR 105. When a link from the BFR 101 to the BFR 102 is not faulty, the BIER packet is transmitted on the primary path. In addition, a path from the BFR 104 to the BFR 102 through the BFR 105 has greater link costs (English: link costs) or more hops than a path from the BFR 104 to the BFR 102 through the BFR 103. Therefore, in a forwarding entry used by the BFR 104 to send the BIER packet to the BFR 102, a next-hop network device of the BFR 104 is the BFR 103. When the link from the BFR 101 to the BFR 102 is faulty, a forwarding path of the BIER packet is switched from the primary path to the secondary path. If a route of the secondary path has been flooded and refreshed to the BFR 103, the BFR 103 may send the BIER packet to the BFR 104 based on a forwarding entry used to indicate the secondary path. In this case, if the route of the secondary path is not flooded to the BFR 104, the forwarding entry used by the BFR 104 to send the BIER packet to the BFR 102 does not change, and is not used to indicate the secondary path. In other words, in the forwarding entry used by the BFR 104 to send the BIER packet to the BFR 102, the next-hop network device of the BFR 104 that is obtained through calculation according to a shortest path may be the network device 103 instead of the network device 105. In this case, the BFR 104 sends the BIER packet to the BFR 103. In addition, because the BFR 103 and the BFR 104 do not identify return of the BIER packet, the BIER packet is cyclically transmitted between the BFR 103 and the BFR 104.

To resolve the foregoing problem, in this embodiment of this application, for a network device, a BIER packet sent by a previous-hop network device of the network device to the network device may carry a device identifier of the previous-hop network device of the network device. In this way, the network device may determine, based on the device identifier of the previous-hop network device of the network device and a device identifier of a next-hop network device of the network device, whether the previous-hop network device of the network device and the next-hop network device of the network device are a same network device. In other words, the network device determines whether an ingress direction and an egress direction of the BIER packet point to a same network device. Therefore, when the network device determines that the ingress direction and the egress direction point to the same network device, the network device discards the BIER packet. In this way, cyclic transmission of the BIER packet between the two network devices is avoided, excessive bandwidth occupation is avoided, and a normally transmitted service flow is prevented from being affected.

For example, one of scenarios of the embodiments of this application may be applied to a network architecture shown in FIG. 1. In the network architecture, the primary path is from the BFR 101 to the BFR 102, and the secondary path is from the BFR 101 to the BFR 102 through the plurality of BFRs such as the BFR 103, the BFR 104, and the BFR 105. When the link from the BFR 101 to the BFR 102 is not faulty, the BIER packet is transmitted on the primary path. In addition, the path from the BFR 104 to the BFR 102 through the BFR 105 has the greater link costs (English: link costs) or more hops than the path from the BFR 104 to the BFR 102 through the BFR 103. Therefore, in the forwarding entry used by the BFR 104 to send the BIER packet to the BFR 102, the next-hop network device of the BFR 104 is the BFR 103. When the link from the BFR 101 to the BFR 102 is faulty, the forwarding path of the BIER packet is switched from the primary path to the secondary path. If the route of the secondary path has been flooded and refreshed to the BFR 103, the BFR 103 may send a BIER packet 111 to the BFR 104 based on the forwarding entry used to indicate the secondary path. The BIER packet 111 carries a device identifier of the BFR 103. Therefore, the BFR 104 may obtain, from the BIER packet 105, a device identifier of a previous-hop network device of the BFR 104, namely, the device identifier of the BFR 103. The BFR 104 determines, based on a bitstring carried in the BIER packet 105, a forwarding entry matching the BIER packet 105, and obtains a device identifier of a next-hop network device of the BFR 104 from the forwarding entry. The forwarding entry is the forwarding entry used by the BFR 104 to send the BIER packet to the BFR 102. In this case, if the route of the secondary path is not flooded to the BFR 104, the forwarding entry determined by the BFR 104 is not actually used to indicate the secondary path. In other words, in the forwarding entry used by the BFR 104 to send the BIER packet to the BFR 102, the next-hop network device of the BFR 104 is the network device 103 instead of the BFR 105. Therefore, the device identifier of the next-hop network device obtained by the BFR 104 is the device identifier of the BFR 103. In this case, the BFR 104 may determine that the previous-hop network device of the BFR 104 and the next-hop network device of the BFR 104 are a same network device. On this basis, the BIER packet 111 may be discarded, to avoid cyclic transmission of the BIER packet between the BFR 103 and the BFR 104. If the route of the secondary path has been flooded to the BFR 104, the forwarding entry determined by the BFR 104 is used to indicate the secondary path, in other words, in the forwarding entry used by the BFR 104 to send the BIER packet to the BFR 102, the next-hop network device of the network device 104 is the BFR 105. Therefore, the device identifier of the next-hop network device obtained by the BFR 104 is a device identifier of the BFR 105. In this case, the BFR 104 may determine that the previous-hop network device (the BFR 103) of the BFR 104 and the next-hop network device (the BFR 105) of the BFR 104 are different network devices. On this basis, a BIER packet 112 may be generated based on the BIER packet 105 and sent to the BFR 105.

It may be understood that the secondary path mentioned above may be pre-calculated before the primary path is faulty, or may be calculated after the primary path is faulty.

There are a plurality of possible implementations for the device identifiers of the BFRs, including the device identifier of the BFR 103 and the device identifier of the BFR 105. For example, the device identifier of the BFR may be a prefix (English: prefix) of the BFR, for example, an internet protocol version 4 (English: Internet Protocol Version 4, IPv4 for short) address prefix or a version 6 internet protocol (English: Internet Protocol Version 6, IPv6 for short) address prefix of the BFR. For another example, in an intermediate system to intermediate system (English: Intermediate System to Intermediate System, IS-IS for short) network, the device identifier of the BFR may be an IS-IS system identifier (English: IS-IS system ID) of the BFR, for example, a 6-byte fixed-length identifier. For still another example, in an open shortest path first (English: Open Shortest Path First, OSPF for short) network, the device identifier of the BFR may be an OSPF router identifier (English: OSPF router ID) of the BFR.

It may be understood that the foregoing scenario is merely an example of a scenario provided in the embodiments of this application, and the embodiments of this application are not limited to this scenario.

With reference to the accompanying drawings, the following describes in detail specific implementations of a packet processing method and apparatus in the embodiments of this application by using embodiments.

FIG. 2 is a schematic flowchart of a packet processing method according to an embodiment of this application. The method 200 may include the following steps.

201: A network device 2 receives a packet 1 sent by a network device 1.

For the packet 1, the network device 1 may determine, based on forwarding information matching the packet 1, a next-hop network device of the network device 1, namely, the network device 2, on a transmission path of the packet 1, so that the network device 1 may send the packet 1 to the network device 2. The network device 1 may be the BFR 103 shown in FIG. 1, and the network device 2 may be the BFR 104 shown in FIG. 1.

In some implementations, the network device 1 may determine, based on indication information sent by the network device 2 in advance, whether the packet 1 carries a device identifier of the network device 1.

If the network device 2 supports an anti-cyclic transmission function, in other words, the network device 2 supports determining whether a previous-hop network device and a next-hop network device are a same network device based on device identifiers, and discarding the packet when determining that the previous-hop network device and the next-hop network device are the same network device, the network device 2 may send an indication message 1 to the network device 1. The indication information 1 may be used to indicate the network device 1 to include the device identifier of the network device 1 in the packet sent to the network device 2. In other words, after receiving the indication information 1, the network device 1 may include the device identifier of the network device 1 in the packet 1 based on the indication information 1, and send the packet 1 to the network device 2. In this way, the network device 2 may obtain the device identifier of the network device 1 from the packet 1. Because the packet 1 is sent by the network device 1 to the network device 2, and the indication information 1 is sent by the network device 2 to the network device 1, it can be learned that the indication information 1 is sent in an ingress direction of a forwarding path of the packet. Therefore, the network device 2 may determine that the network device 1 is the previous-hop network device of the network device 2.

If the network device 2 does not support the anti-cyclic transmission function, in other words, the network device 2 does not support determining, based on the device identifiers, whether the previous-hop network device and the next-hop network device are the same network device, and discarding the packet when determining that the previous-hop network device and the next-hop network device are the same network device, the network device 2 may send an indication message 2 to the network device 1. The indication information 2 may be used to indicate the network device 1 not to include the device identifier of the network device 1 in the packet sent to the network device 2. In other words, after receiving the indication information 2, the network device 1 may send, to the network device 2 based on the indication information 2, the packet 1 that does not carry the device identifier of the network device 1. In this way, the network device 2 cannot obtain the device identifier of the network device 1 from the packet 1, and does not determine the previous-hop network device of the network device 2.

It may be understood that the network device 2 and the network device 1 may establish an interior gateway protocol (English: Interior Gateway Protocol, IGP for short) connection. The network device 1 sends a first IGP packet to the network device 2, where the first IGP packet includes the indication information 1. The network device 2 sends a second IGP packet to the network device 1, where the second IGP packet includes the indication information 2.

In some embodiments, the first IGP packet includes a first type-length-value (English: Type-Length-Value, TLV for short), and the first TLV includes the indication information 1. In some embodiments, the second IGP packet includes a second TLV, and the second TLV includes the indication information 2.

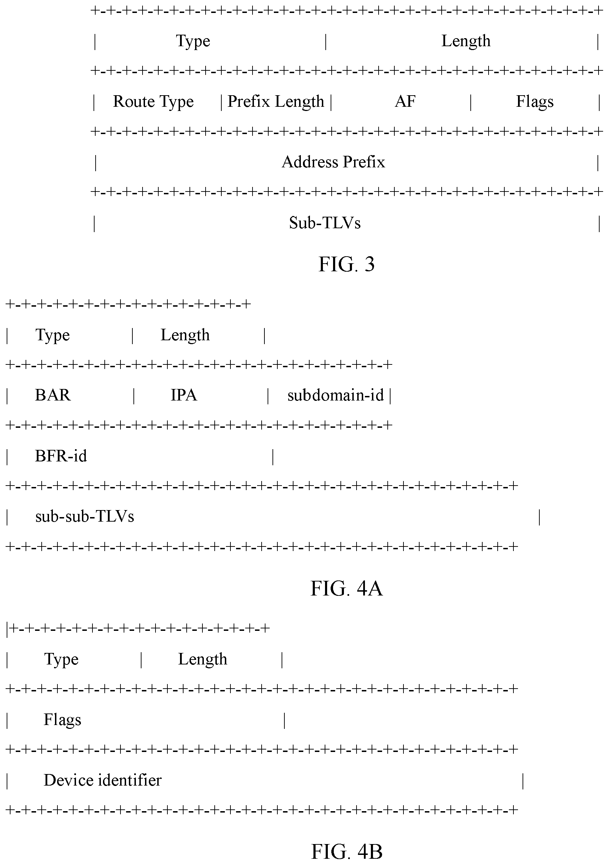

In a possible implementation, an identifier used to identify whether the network device supports the anti-cyclic transmission function may be defined. When the first IGP packet is an OSPF packet, as shown in FIG. 3, a Flags field of the OSPF packet may be used to carry the indication information 1 and the indication information 2. For example, when the last bit of the Flags field is set, the Flags field carries the indication information 1. When the last bit of the Flags field is not set, the Flags field carries the indication information 2.

In another possible implementation, BIER sub-sub-TLV (English: sub-sub-TLV) information used to identify whether the network device supports the anti-cyclic transmission function may be further defined. The BIER sub-sub-TLV information may be carried in an IGP packet, for example, an IS-IS packet or a sub-sub-TLV of an OSPF packet. For example, refer to an example of a structure shown in FIG. 4A. The identifier used to identify whether the network device supports the anti-cyclic transmission function is carried in a sub-sub-TLV of the OSPF packet. For a packet format of the sub-sub-TLV, refer to FIG. 4B. A Flags (English: Flags) field is used to carry the indication information 1 or the indication information 2. For example, when the last bit of the Flags field is set, the Flags field carries the indication information 1. When the last bit of the Flags field is not set, the Flags field carries the indication information 2. A value carried in a Type (English: Type) field may be defined, for example, Type = 2.

In this embodiment, there are a plurality of possible implementations of a device identifier of the network device 2. In an example, in a network using a BIER technology, the device identifier of the network device 2 may be a BFR prefix. In another example, in an IS-IS network, the device identifier of the network device 2 may be an IS-IS system ID. In still another example, in an OSPF network, the device identifier of the network device 2 may be an OSPF router ID.

202: The network device 2 determines a network device 3 based on the packet 1.

In a specific implementation, for the packet 1, after receiving the packet 1, the network device 2 may determine the forwarding information matching the packet 1. The forwarding information may be used to indicate the next-hop network device of the network device 2 on the transmission path of the packet 1. Therefore, the network device 2 may determine the next-hop network device, namely, the network device 3, based on the forwarding information. For example, in the network using the BIER technology, the packet 1 is a BIER packet, and a bitstring carried in the packet 1 indicates a destination node to which the packet 1 can be transmitted from the network device 2. The network device 2 is a BFR. Forwarding information set on the network device 2 includes at least a bitmask (English: bitmask, BM for short) and an indication identifier of the next-hop network device of the network device 2. In other words, the forwarding information is actually a correspondence between the BM and the next-hop network device of the network device 2. The indication identifier may be, for example, an identifier of a port used by the network device 2 to transmit information to the next-hop network device. The network device 2 may compare the bitstring carried in the packet 1 with a bitmask (English: bitmask, BM for short) in each piece of forwarding information set on the network device 2. If the bitstring of the packet 1 matches a BM of forwarding information 1, the forwarding information 1 is the forwarding information matching the packet 1. The forwarding information 1 indicates the network device 3 that is the next-hop of the network device 2 on the transmission path of the packet 1. Therefore, the network device 2 may determine the network device 3 based on the forwarding information 1. It may be understood that, for details of the bitstring of the BIER packet and the forwarding information on the BFR, refer to descriptions of the Request For Comments (English: Request For Comments, RFC for short) RFC 8279 of the Internet Engineering Task Force (English: Internet Engineering Task Force, IETF for short). The RFC 8279 is incorporated in this application by reference in its entirety.

If the packet 1 carries the device identifier of the network device 1, the network device 2 may obtain the device identifier of the network device 1 from the packet 1, and obtain a device identifier of the network device 3 based on the packet 1. In this way, the network device 2 may determine whether the device identifier of the network device 1 is the same as the device identifier of the network device 3, and determine whether the network device 1 and the network device 3 are a same network device, to determine whether a next hop and a previous hop of the packet 1 are a same network device. If the device identifier of the network device 1 is the same as the device identifier of the network device 3, the network device 3 and the network device 1 are the same network device, and the network device 2 may perform step 203. If the device identifier of the network device 1 is different from the device identifier of the network device 3, the network device 3 and the network device 1 are not the same network device, and the network device 2 may perform step 204.

The device identifier of the network device 3 may be sent by the network device 3 to the network device 2 in advance. The network device 2 may record the device identifier of the network device 3 in the forwarding information. In this way, after receiving the packet 1, the network device 2 may obtain the device identifier of the network device 3 from the forwarding information.

It may be understood that the device identifier of the network device 3 may be carried in an IGP packet, for example, TLV information of the IGP packet. The IGP packet is sent by the network device 3 to the network device 2. For example, in the IS-IS network using the BIER technology, IS-IS TLV information sent by the network device 3 to the network device 2 carries a BFR prefix of the network device 3, and the BFR prefix of the network device 3 may be used as the device identifier of the network device 3. For another example, in the IS-IS network using the BIER technology, BIER sub-sub-TLV information used to advertise a device identifier may be defined. BIER sub-sub-TLV information sent by the network device 3 to the network device 2 carries an IS-IS system ID of the network device 3, and the IS-IS system ID of the network device 3 may be used as the device identifier of the network device 3. For still another example, in the OSPF network using the BIER technology, BIER sub-sub-TLV information used to advertise a device identifier may be defined. BIER sub-sub-TLV information sent by the network device 3 to the network device 2 carries an OSPF router ID of the network device 3, and the OSPF router ID of the network device 3 may be used as the device identifier of the network device 3. In an example of the BIER sub-sub-TLV information shown in FIG. 4B, a device identifier field may be used to carry the IS-IS system ID or the OSPF router ID of the network device 3. The value carried in the Type (English: Type) field may be defined, for example, Type = 2.

In addition, if the packet 1 does not carry the device identifier of the network device 1 or the network device 2 cannot obtain the device identifier of the network device 3, the network device 2 may perform 204.

203: The network device 2 discards the packet 1.

If the device identifier of the network device 1 is the same as the device identifier of the network device 3, the network device 3 is the network device 1, in other words, the previous hop and the next hop of the packet 1 are the same network device, and the network device 2 may discard the packet 1. In this way, the packet 1 is not sent by the network device 2 back to the network device 1, thereby avoiding cyclic transmission of the packet 1 between the network device 1 and the network device 2.

204: The network device 2 generates a packet 2 based on the packet 1, and sends the packet 2 to the network device 3.

If the network device 2 cannot obtain the device identifier of the network device 1 because the packet 1 does not carry the device identifier of the network device 1, or the network device 2 cannot obtain the device identifier of the network device 3, it cannot be determined whether the network device 1 and the network device 3 are the same network device, in other words, it cannot be determined whether the previous hop and the next hop of the packet 1 are the same network device. In this case, the network device 2 may generate, based on the packet 1, the packet 2 sent to the next hop, and send the packet 2 to the network device 3.

If the device identifier of the network device 1 is different from the device identifier of the network device 3, the network device 1 and the network device 3 are not the same network device, in other words, the previous hop and the next hop of the packet 1 are different network devices. In this case, the network device 2 may generate, based on the packet 1, the packet 2 sent to the next hop, and send the packet 2 to the network device 3. For example, in the network using the BIER technology, the packet 1 is the BIER packet, and the network device 2 may update the bitstring of the packet 1 based on the forwarding information matching the packet 1, to obtain the packet 2. A bitstring of the packet 2 indicates a destination node to which the packet 1 can be transmitted from the network device 3. It may be understood that, for details of the bitstring of the BIER packet and the forwarding information on the BFR, refer to the descriptions of the RFC 8279 of the IETF. The RFC 8279 is incorporated in this application by reference in its entirety.

In some implementations, the packet 2 sent by the network device 2 to the network device 3 may further carry the device identifier of the network device 2. In this way, the network device 3 may obtain the device identifier of the network device 2 from the packet 2, and determine that the network device 2 is a previous-hop network device of the network device 3, to determine whether the network device 2 and a next-hop network device of the network device 3 are a same network device, and accordingly determine whether to discard the packet 2.

The device identifier of the network device 2 may be recorded in the forwarding information matching the packet 1. In this way, after matching the forwarding information based on the packet 1, the network device 2 may obtain the device identifier of the network device 2 from the forwarding information, include the device identifier of the network device 2 in the packet 2 generated based on the packet 1, and send the packet 2 to the network device 3.

In some implementations, the network device 2 may determine, based on indication information sent by the network device 3 in advance, whether the packet 2 carries the device identifier of the network device 2.

If the network device 3 supports the anti-cyclic transmission function, in other words, the network device 3 supports determining whether the previous-hop network device and the next-hop network device are the same network device based on device identifiers, and discarding the packet when determining that the previous-hop network device and the next-hop network device are the same network device, the network device 3 may send an indication message 3 to the network device 2. The indication information 3 may be used to indicate the network device 2 to include the device identifier of the network device 2 in the packet sent to the network device 3. In other words, after receiving the indication information 3, the network device 2 may include the device identifier of the network device 2 in the packet 2 based on the indication information 3, and send the packet 2 to the network device 3. In this way, the network device 3 may obtain the device identifier of the network device 2 from the packet 2, to determine that the network device 2 is the previous-hop network device of the network device 3.

If the network device 3 does not support the anti-cyclic transmission function, in other words, the network device 3 does not support determining, based on the device identifiers, whether the previous-hop network device and the next-hop network device are the same network device, and discarding the packet when determining that the previous-hop network device and the next-hop network device are the same network device, the network device 3 may send an indication message 4 to the network device 2. The indication information 4 may be used to indicate the network device 2 not to include the device identifier of the network device 2 in the packet sent to the network device 3. In other words, after receiving the indication information 4, the network device 2 may send, to the network device 3 based on the indication information 4, the packet 2 that does not carry the device identifier of the network device 2. In this way, the network device 2 cannot obtain the device identifier of the network device 2 from the packet 2, and does not determine the previous-hop network device of the network device 3.

It may be understood that the indication information 3 and the indication information 4 each may be carried in type-length-value (English: Type-Length-Value, TLV for short) information of the interior gateway protocol (English: Interior Gateway Protocol, IGP for short), and the IGP is sent by the network device 3 to the network device 2. For example, in the network using the BIER technology, the BIER sub-sub-TLV information used to identify whether the network device supports the anti-cyclic transmission function may be defined. For example, for the BIER sub-sub-TLV information, refer to examples of structures shown in FIG. 4A and FIG. 4B. The Flags (English: Flags) field may be used to carry the indication information 3 or the indication information 4. The value carried in the Type (English: Type) field may be defined, for example, Type = 2. For another example, for the BIER sub-sub-TLV information, refer to the example of the structure shown in FIG. 4B. The Flags (English: Flags) field may be used to carry the indication information 3 or the indication information 4. The device identifier field is used to carry the IS-IS system ID or the OSPF router ID of the network device 3. The value carried in the Type (English: Type) field may be defined, for example, Type = 2.

The device identifier of the network device 2 may be sent by the network device 2 to the network device 3 in advance. In this way, for the packet received by the network device 3, if the next-hop network device of the network device 3 is the network device 2, the network device 3 may determine, based on the device identifier of the network device 2, whether a previous-hop network device and a next-hop network device of the packet are a same network device, to determine whether to discard the packet.

It may be understood that the device identifier of the network device 2 may be carried in TLV information of an IGP, and the IGP is sent by the network device 2 to the network device 3. For example, in the IS-IS network using the BIER technology, IS-IS TLV information sent by the network device 2 to the network device 3 carries a BFR prefix of the network device 2, and the BFR prefix of the network device 2 may be used as the device identifier of the network device 2. For another example, in the IS-IS network using the BIER technology, BIER sub-sub-TLV information used to advertise a device identifier may be defined. BIER sub-sub-TLV information sent by the network device 2 to the network device 3 carries an IS-IS system ID of the network device 2, and the IS-IS system ID of the network device 2 may be used as the device identifier of the network device 2. For still another example, in the OSPF network using the BIER technology, BIER sub-sub-TLV information used to advertise a device identifier may be defined. BIER sub-sub-TLV information sent by the network device 2 to the network device 3 carries an OSPF router ID of the network device 2, and the OSPF router ID of the network device 2 may be used as the device identifier of the network device 2. In the example of the BIER sub-sub-TLV information shown in FIG. 4B, the device identifier field may be used to carry the IS-IS system ID or the OSPF router ID of the network device 2. The value carried in the Type (English: Type) field may be defined, for example, Type = 2. It should be noted that, in the network using the BIER technology, both the packet 1 and the packet 2 are BIER packets. The network device 2 is an intermediate network device in a BIER domain, in other words, the network device 2 is neither a BFIR nor a BFER, but a BFR that forwards the BIER packet in a BIER network. The network device 1 may be an intermediate BFR, or may be a BFIR. The network device 3 may be an intermediate BFR, or may be a BFER. For example, in the example of the scenario shown in FIG. 1, the BFR 103 is equivalent to the network device 1 mentioned in the method 200, the BFR 104 is equivalent to the network device 2 mentioned in the method 200, the BFR 103 or the BFR 105 is equivalent to the network device 3 mentioned in the method 200, the BIER packet 111 is equivalent to the packet 1, and the BIER packet 112 is equivalent to packet 2.

In this embodiment, for the packet 1 received by the network device 2, the network device 2 may determine, based on the device identifier of the previous-hop network device 1 of the packet 1 and the device identifier of the next-hop network device 3 of the packet 1, whether the previous hop and the next hop are the same network device. Therefore, when both the previous hop and the next hop are the same network device, the packet is discarded. In this way, cyclic transmission of the packet between the two network devices is avoided, excessive bandwidth occupation is avoided, and a normally transmitted service flow is prevented from being affected.

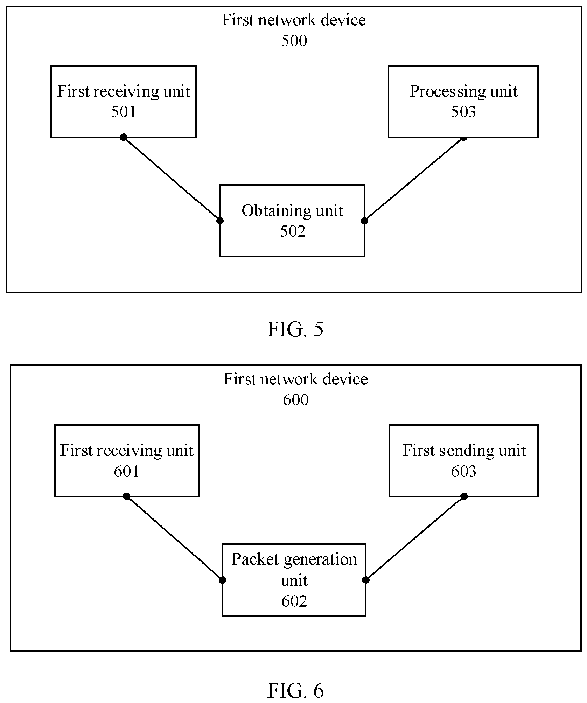

FIG. 5 is a schematic diagram of a structure of a first network device 500 according to an embodiment of this application. The first network device 500 includes a first receiving unit 501, an obtaining unit 502, and a processing unit 503. The first receiving unit 501 is configured to receive a first BIER packet sent by a second network device, where the first BIER packet carries a device identifier of the second network device, and the first network device is an intermediate network device that is in a BIER domain and that is configured to forward the first BIER packet. The obtaining unit 502 is configured to determine, based on the first BIER packet and forwarding information, that a next hop that forwards the first BIER packet is a third network device, and obtain a device identifier of the third network device. The third network device is a next hop that is of the first network device and that is obtained to forward the first BIER packet. The processing unit 503 is configured to: discard the first BIER packet when the device identifier of the second network device is the same as the device identifier of the third network device; and/or send a second BIER packet generated based on the first BIER packet to the third network device when the device identifier of the second network device is different from the device identifier of the third network device.

In some possible implementations, the obtaining unit 502 includes a determining subunit and an obtaining subunit. The determining subunit is configured to determine the forwarding information matching the first BIER packet. The obtaining subunit is configured to obtain the device identifier of the third network device from the forwarding information.

In some possible implementations, the first network device 500 further includes a second receiving unit. The second receiving unit is configured to receive the device identifier of the third network device sent by the third network device.

In some possible implementations, the device identifier of the third network device is carried in first type-length-value TLV information of an interior gateway protocol IGP, and the IGP is sent by the third network device to the first network device.

In some possible implementations, the first network device 500 further includes a first sending unit. The first sending unit is configured to send first indication information to the second network device, where the first indication information is used to indicate to include the device identifier of the second network device in the BIER packet sent by the second network device to the first network device.

In some possible implementations, the first indication information is carried in second TLV information of an IGP, and the IGP is sent by the first network device to the second network device.

In some possible implementations, the second BIER packet carries a device identifier of the first network device.

In some possible implementations, the first network device 500 further includes a third receiving unit, a joining unit, and a second sending unit. The third receiving unit is configured to receive a third BIER packet sent by a fourth network device. The joining unit is configured to add the device identifier of the first network device to the third BIER packet to obtain a fourth BIER packet. The second sending unit is configured to send the fourth BIER packet to a fifth network device.

In some possible implementations, the first network device 500 further includes a second sending unit. The second sending unit is configured to send the device identifier of the first network device to the third network device.

In some possible implementations, the device identifier of the first network device may be carried in third TLV information of an IGP, and the IGP is sent by the first network device to the third network device.

In some possible implementations, the first network device 500 further includes a fourth receiving unit. The fourth receiving unit is configured to receive second indication information sent by the third network device, where the second indication information is used to indicate to include the device identifier of the first network device in the BIER packet sent by the first network device to the third network device.

In some possible implementations, the second indication information may be carried in fourth TLV information of an IGP, and the IGP is sent by the third network device to the first network device.

It may be understood that the first network device 500 shown in FIG. 5 may be the network device 2 mentioned in the method 200 shown in FIG. 2. Therefore, for various specific embodiments of the first network device 500, refer to related descriptions of the method 200. Details are not described in this embodiment again.

FIG. 6 is a schematic diagram of a structure of a first network device 600 according to an embodiment of this application. The first network device 600 is a first network device, and includes a first receiving unit 601, a packet generation unit 602, and a first sending unit 603. The first receiving unit 601 is configured to receive a first BIER packet. The packet generation unit 602 is configured to add a device identifier of the first network device to the first BIER packet, to obtain a second BIER packet. The first sending unit 603 is configured to send the second BIER packet to a second network device. The second BIER packet carries the device identifier of the first network device, and the device identifier of the first network device is used to indicate the second network device to discard the second BIER packet when the device identifier of the first network device is the same as a device identifier of a third network device; and/or send a third BIER packet generated based on the second BIER packet to the third network device when the device identifier of the second network device is different from the device identifier of the third network device. The third network device is a next hop that is of the first network device and that is obtained to forward the first BIER packet, and the second network device is an intermediate network device that is in a BIER domain and that is configured to forward the BIER packet.

In some possible implementations, the first network device 600 further includes a second sending unit. The second sending unit is configured to: before the second BIER packet is sent to the second network device, send the device identifier of the first network device to the second network device. The first network device and the third network device are a same network device.

In some possible implementations, the device identifier of the first network device is carried in first TLV information of an IGP, and the IGP is sent by the first network device to the second network device.

In some possible implementations, the first network device 600 further includes a second receiving unit. The second receiving unit is configured to receive indication information sent by the second network device, where the indication information is used to indicate to include the device identifier of the first network device in the packet sent by the first network device to the second network device.

In some possible implementations, the indication information may be carried in second TLV information of an IGP, and the IGP is sent by the third network device to the first network device.

It may be understood that the first network device 600 shown in FIG. 6 may be the network device 1 mentioned in the method 200 shown in FIG. 2. Therefore, for various specific embodiments of the first network device 600, refer to related descriptions of the method 200. Details are not described in this embodiment again.

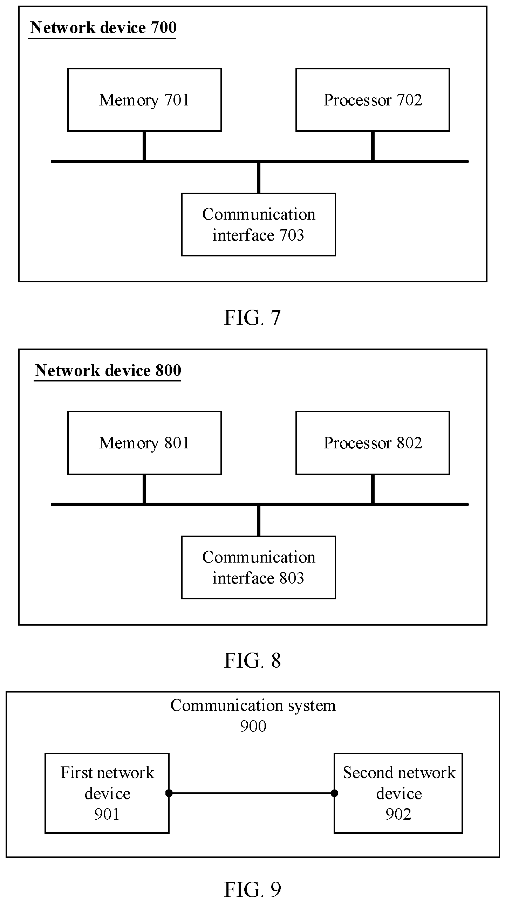

FIG. 7 is a schematic diagram of a structure of a network device according to an embodiment of this application. The network device 700 includes a memory 701 and a processor 702. The memory 701 is configured to store program code. The processor 702 is configured to run instructions in the program code, to enable the network device 700 to perform an operation performed by the network device 2 in any implementation of the method 200.

The memory 701 may be a volatile memory (volatile memory), for example, a random-access memory (random-access memory, RAM); may be a non-volatile memory (non-volatile memory), for example, a read-only memory (read-only memory, ROM), a flash memory (flash memory), a hard disk drive (hard disk drive, HDD), or a solid-state drive (solid-state drive, SSD); or may be a combination of the foregoing types of memories. The memory 701 is configured to store program code that can implement the method in this application, a configuration file of a network device in a BIER domain, or other content.

The processor 702 may be a central processing unit (central processing unit, CPU); or may be one or more integrated circuits configured to implement the embodiments of this application, for example, one or more digital signal processors (digital signal processor, DSP), or one or more field programmable gate arrays (field programmable gate array, FPGA).

The network device 700 further includes a communication interface 703. The communication interface 703 may separately communicate with the memory 701 and the processor 702. In some embodiments, the communication interface 703 separately communicates with the memory 701 and the processor 702 through a bus. The communication interface 703 is configured to receive a packet sent by another device to the network device 700, or send a packet sent by the network device 700 to another device.

FIG. 8 is a schematic diagram of a structure of a network device according to an embodiment of this application. The network device 800 includes a memory 801 and a processor 802. The memory 801 is configured to store program code. The processor 802 is configured to run instructions in the program code, to enable the network device 800 to perform an operation performed by the network device 1 in any implementation described in the method 200.

The memory 801 may be a volatile memory, for example, a RAM; may be a non-volatile memory, for example, a ROM, a flash memory, an HDD, or an SSD; or may be a combination of the foregoing types of memories. The memory 801 is configured to store program code that can implement the method in this application, a configuration file of a network device in a BIER domain, or other content.

The processor 802 may be a CPU; or may be one or more integrated circuits configured to implement the embodiments of this application, for example, one or more DSPs or one or more FPGAs.

The network device 800 may further include a communication interface 803. The communication interface 803 separately communicates with the memory 801 and the processor 802. In some embodiments, the communication interface 803 separately communicates with the memory 801 and the processor 802 through a bus. The communication interface 803 is configured to receive a packet sent by another device to the network device 800, or send a packet sent by the network device 800 to another device.

FIG. 9 is a schematic diagram of a structure of a communication system according to an embodiment of this application. The communication system 900 includes a first network device 901 and a second network device 902. The first network device 901 is configured to perform an operation performed by the network device 2 in any implementation described in the method 200. The second network device 902 is configured to perform an operation performed by the network device 1 in any implementation described in the method 200. In a specific implementation, the first network device 901 may be the foregoing network device 700, and the second network device may be the foregoing network device 800. Alternatively, the first network device 901 may be the foregoing apparatus 500, and the second network device 902 may be the foregoing apparatus 600.

In addition, an embodiment of this application further provides a computer program product. When the computer program product runs on a computer, the computer is enabled to perform an operation performed by the network device 1 or an operation performed by the network device 2 in any implementation described in the foregoing method 200.

In addition, an embodiment of this application further provides a computer-readable storage medium. The computer-readable storage medium stores instructions. When the instructions are run on a computer or a processor, the computer or the processor is enabled to perform an operation performed by the network device 1 or an operation performed by the network device 2 in any implementation described in the foregoing method 200.

"First" in names such as "the first network device" and "the first BIER packet" mentioned in the embodiments of this application is merely used as a name identifier, and does not represent first in sequence. This rule is also applicable to "second" and the like.

It can be learned from the foregoing descriptions of the implementations that a person skilled in the art may clearly understand that some or all steps of the methods in the embodiments may be implemented by software in addition to a universal hardware platform. Based on such an understanding, the technical solutions of this application may be implemented in a form of a software product. The computer software product may be stored in a storage medium, for example, a read-only memory (English: read-only memory, ROM)/RAM, a magnetic disk, or an optical disc, and includes several instructions for instructing a computer device (which may be a personal computer, a server, or a network communication device such as a router) to perform the methods described in the embodiments or some parts of the embodiments of this application.

The embodiments in this specification are all described in a progressive manner, for same or similar parts in the embodiments, refer to these embodiments, and each embodiment focuses on a difference from other embodiments. Especially, apparatus and system embodiments are basically similar to a method embodiment, and therefore are described briefly; for related parts, refer to some descriptions in the method embodiment. The described device and system embodiments are merely examples. The modules described as separate parts may or may not be physically separate, and parts displayed as modules may or may not be physical modules, may be located in one position, or may be distributed on a plurality of network units. Some or all the modules may be selected based on actual needs to achieve the objectives of the solutions of the embodiments. A person of ordinary skill in the art may understand and implement the embodiments of the present invention without creative efforts.

The foregoing descriptions are merely example implementations of this application, but are not intended to limit the protection scope of this application. The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A bit index explicit replication BIER packet processing method, comprising:
receiving, by a first network device, a first BIER packet sent by a second network device, wherein the first BIER packet carries a device identifier of the second network device, and the first network device is an intermediate network device that is in a BIER domain and that is configured to forward the first BIER packet;
obtaining, by the first network device, a device identifier of a third network device based on a correspondence between the first BIER packet and the third network device, wherein the third network device is a next hop that is of the first network device and that is obtained to forward the first BIER packet; and
if the device identifier of the second network device is the same as the device identifier of the third network device, discarding, by the first network device, the first BIER packet; or
if the device identifier of the second network device is different from the device identifier of the third network device, sending, by the first network device to the third network device, a second BIER packet generated based on the first BIER packet.

2. The method according to claim 1, wherein the obtaining, by the first network device, a device identifier of a third network device based on a correspondence between the first BIER packet and the third network device comprises:
determining, by the first network device, forwarding information matching the first BIER packet; and
obtaining, by the first network device, the device identifier of the third network device from the forwarding information.

3. The method according to claim 1 or 2, further comprising:
receiving, by the first network device, the device identifier of the third network device sent by the third network device.

4. The method according to claim 3, wherein the receiving, by the first network device, the device identifier of the third network device sent by the third network device comprises: receiving, by the first network device, a first interior gateway protocol IGP packet sent by the third network device, wherein the first IGP packet comprises the device identifier of the third network device.

5. The method according to claim 4, wherein the first IGP packet comprises first type-length-value TLV information, and the first TLV information comprises the device identifier of the third network device.

6. The method according to any one of claims 1 to 5, wherein before the receiving, by a first network device, a first BIER packet sent by a second network device, the method further comprises:
sending, by the first network device, indication information to the second network device, wherein the indication information is used to indicate to comprise the device identifier of the second network device in the first BIER packet sent by the second network device to the first network device.

7. The method according to claim 6, wherein the indication information is carried in second TLV information of a second IGP packet and sent by the first network device to the second network device.

8. The method according to any one of claims 1 to 7, wherein the second BIER packet carries a device identifier of the first network device.

9. The method according to any one of claims 1 to 8, further comprising:
receiving, by the first network device, a third BIER packet sent by a fourth network device;
generating, by the first network device, a fourth BIER packet based on the third BIER packet, wherein the fourth BIER packet comprises the device identifier of the first network device; and
sending, by the first network device, the fourth BIER packet to a fifth network device.

10. A bit index explicit replication BIER packet processing method, comprising:
receiving, by a first network device, a first BIER packet;
adding, by the first network device, a device identifier of the first network device to the first BIER packet, to obtain a second BIER packet; and
sending, by the first network device, the second BIER packet to a second network device, wherein
the second BIER packet comprises the device identifier of the first network device; and the device identifier of the first network device is used to indicate the second network device to discard the second BIER packet when the device identifier of the first network device is the same as a device identifier of a third network device, or send a third BIER packet generated based on the second BIER packet to the third network device when a device identifier of the second network device is different from the device identifier of the third network device, wherein the third network device is a next hop that is of the first network device and that is determined to forward the first BIER packet, and the second network device is an intermediate network device that is in a BIER domain and that is configured to forward the first BIER packet.

11. The method according to claim 10, wherein before the sending, by the first network device, the second BIER packet to a second network device, the method further comprises:
sending, by the first network device, the device identifier of the first network device to the second network device, wherein
the first network device and the third network device are a same network device.

12. The method according to claim 11, wherein the sending, by the first network device, the device identifier of the first network device to the second network device comprises: sending, by the first network device, an interior gateway protocol IGP packet to the second network device, wherein the IGP packet comprises the device identifier of the first network device.

13. The method according to claim 12, wherein the IGP packet comprises type-length-value TLV information, and the TLV information comprises the device identifier of the first network device.

14. A first network device, comprising:
a first receiving unit, configured to receive a first bit index explicit replication BIER packet sent by a second network device, wherein the first BIER packet comprises a device identifier of the second network device, and the first network device is an intermediate network device that is in a BIER domain and that is configured to forward the first BIER packet;
an obtaining unit, configured to obtain a device identifier of a third network device based on a correspondence between the first BIER packet and the third network device, wherein the third network device is a next hop that is of the first network device and that is determined to forward the first BIER packet; and
a processing unit, configured to: discard the first BIER packet when the device identifier of the second network device is the same as the device identifier of the third network device; or send a second BIER packet generated based on the first BIER packet to the third network device when the device identifier of the second network device is different from the device identifier of the third network device.

15. The first network device according to claim 14, wherein the obtaining unit comprises:
a determining subunit, configured to determine forwarding information matching the first BIER packet; and
an obtaining subunit, configured to obtain the device identifier of the third network device from the forwarding information.

16. The first network device according to claim 14 or 15, further comprising:
a second receiving unit, configured to receive the device identifier of the third network device sent by the third network device.

17. The first network device according to claim 16, wherein the second receiving unit is specifically configured to receive the device identifier of the third network device that is carried in first type-length-value TLV information of a first interior gateway protocol IGP protocol, and the first IGP packet is sent by the third network device to the first network device.

18. The first network device according to any one of claims 14 to 17, further comprising:
a first sending unit, configured to: before receiving the first BIER packet sent by the second network device, send first indication information to the second network device, wherein the first indication information is used to indicate to comprise the device identifier of the second network device in the first BIER packet sent by the second network device to the first network device.

19. The first network device according to claim 18, wherein the first sending unit is specifically configured to comprise the first indication information in second TLV information of a second IGP protocol, and send the second IGP protocol to the second network device by the first network device.

20. The first network device according to any one of claims 14 to 19, wherein the second BIER packet comprises a device identifier of the first network device.

21. The first network device according to any one of claims 14 to 20, further comprising:
a third receiving unit, configured to receive a third BIER packet sent by a fourth network device;
a packet generation unit, configured to generate a fourth BIER packet based on the third BIER packet, wherein the fourth BIER packet comprises the device identifier of the first network device; and
a second sending unit, configured to send the fourth BIER packet to a fifth network device.

22. A first network device, comprising:
a receiving unit, configured to receive a first bit index explicit replication BIER packet;
a packet generation unit, configured to generate a second BIER packet based on the first BIER packet, wherein the second BIER packet comprises a device identifier of the first network device; and
a first sending unit, configured to send the second BIER packet to a second network device, wherein
the device identifier of the first network device is used to indicate the second network device to
discard the second BIER packet when the device identifier of the first network device is the same as a device identifier of a third network device; or send a third BIER packet to the third network device when a device identifier of the second network device is different from the device identifier of the third network device, wherein the third network device is a next hop that is of the first network device and that is determined to forward the first BIER packet, and the second network device is an intermediate network device that is in a BIER domain and that is configured to forward the first BIER packet.

23. The first network device according to claim 22, further comprising:
a second sending unit, configured to: before the first sending unit sends the second BIER packet to the second network device, send the device identifier of the first network device to the second network device, wherein
the first network device and the third network device are a same network device.

24. The first network device according to claim 23, wherein the second sending unit is specifically configured to comprise the device identifier of the first network device in TLV information of an IGP protocol, and send the IGP protocol to the second network device by the first network device.

25. A communication system, comprising a first network device and a second network device, wherein
the first network device is the first network device according to any one of claims 14 to 21; and
the second network device is the first network device according to any one of claims 22 to 24.
